# EUROPEAN PATENT APPLICATION

(11) **EP 4 852 603 A1**
(43) Date of publication of application: **09.12.2026**
(21) Application number: 26726578.3
(22) Date of filing: 24.03.2026
(51) Int. Cl.: H04W 76/14, H04W 76/11, H04W 76/27, H04W 88/04

(54) **METHOD FOR PERFORMING RELAY COMMUNICATION IN WIRELESS COMMUNICATION SYSTEM, AND DEVICE THEREFOR**

(30) Priority: 24.03.2025 US 202563776946 P
(71) Applicant: LG ELECTRONICS, INC., Seoul 07336 (KR)
(72) Inventor: BACK, Seoyoung, Seoul 06772 (KR); LEE, Seungmin, Seoul 06772 (KR)
(74) Representative: Plasseraud IP
(86) International application number: PCT/KR2026/004686
(87) International publication number: WO 2026/205956

(57) **Abstract**

An apparatus according to various embodiments forms a first connection with a parent relay user equipment (UE), forms a second connection with a child relay UE, receives an initial radio resource control (RRC) message of a remote UE through the second connection, forwards the initial RRC message of the remote UE through the first connection, and transmits, through the first connection, a first message that includes identification information to notify a base station (BS) that the first relay UE is an intermediate relay UE associated with the remote UE, based on the switching from an RRC_IDLE or RRC_INACTIVE state to an RRC connection state.

## Description

### TECHNICAL FIELD

The present disclosure relates to a method of performing multi-hop-based relay communication in a wireless communication system and a device therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

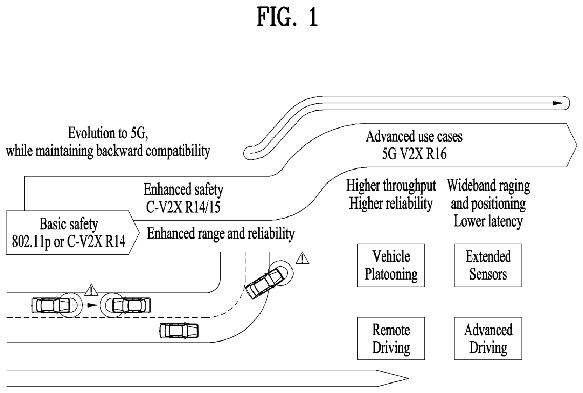

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

### DISCLOSURE

### Technical Problem

The object of the present disclosure is to provide a method of performing multi-hop-based relay communication more accurately and efficiently.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### Technical Solution

According to an aspect, a method by a first user equipment (UE) includes establishing a first connection with a parent relay UE, establishing a second connection with a child relay UE, receiving an initial radio resource control (RRC) message of a remote UE through the second connection, forwarding the initial RRC message of the remote UE through the first connection, and based on the first relay UE being switched from an RRC_IDLE state or an RRC_INACTIVE state to an RRC connection state, transmitting, through the first connection, a first message including identification information for notifying a base station (BS) that the first relay UE is an intermediate relay UE associated with the remote UE.

The identification information may include first identification information for identifying the remote UE and second identification information for identifying the second connection associated with the remote UE.

The first identification information may be a local identifier (ID) assigned to the remote UE, and the second identification information may be a layer 2 (L2) ID of the child relay UE.

The method may further include receiving, through the first connection, control data to notify the first relay UE, which is in the RRC_IDLE state or the RRC_INACTIVE state, of a state change of the remote UE, wherein the state change may be for a change in an RRC state of the remote UE or for release of a relay operation of the remote UE.

The control data may be included in a control protocol data unit (PDU) related with an inter-UE relay adaptation protocol.

The control data may be included in an inter-UE RRC message.

Based on reception of the control data, the first relay UE may release both a local ID associated with the remote UE and configuration information of the second connection associated with the remote UE.

The control data may include a field for the number of a plurality of remote UEs corresponding to the state change information and an identifier (ID) field for each of the plurality of remote UEs.

The first relay UE may receive configuration information for the second connection for multi-hop based UE-to-network (U2N) relay communication through the first connection based on transmission of the first message including the identification information.

According to another aspect, at least one non-transitory computer-readable recording medium includes instructions that perform operations when executed by the at least one processor, the operations including establishing a first connection with a parent relay user equipment (UE), establishing a second connection with a child relay UE, receiving an initial radio resource control (RRC) message of a remote UE through the second connection, forwarding the initial RRC message of the remote UE through the first connection, and based on the first relay UE being switched from an RRC_IDLE state or an RRC_INACTIVE state to an RRC connection state, transmitting, through the first connection, a first message including identification information for notifying a base station (BS) that the first relay UE is an intermediate relay UE associated with the remote UE.

According to another aspect, a first relay user equipment (UE) includes a radio frequency (RF) transceiver, and at least one processor connected to the RF transceiver, wherein the at least one processor controls the RF transceiver to form a first connection with a parent relay UE and form a second connection with a child relay UE, receiving an initial radio resource control (RRC) message of a remote UE through the second connection, forwarding the initial RRC message of the remote UE through the first connection, and transmitting, through the first connection, a first message that includes identification information to inform a BS that the first relay UE is an intermediate relay UE associated with the remote UE, based on switching from an RRC_IDLE or RRC_INACTIVE state to an RRC connection state.

According to another aspect, a processing device for controlling a first relay user equipment (UE) includes at least one processor, and at least one memory connected to the at least one processor and storing instructions that, when executed by the at least one processor, cause the first relay UE to form a first connection with a parent relay user equipment (UE), form a second connection with a child relay UE, receive an initial radio resource control (RRC) message of a remote UE through the second connection, forward the initial RRC message of the remote UE through the first connection, and based on the first relay UE being switched from an RRC_IDLE state or an RRC_INACTIVE state to an RRC connection state, transmit, through the first connection, a first message including identification information for notifying a base station (BS) that the first relay UE is an intermediate relay UE associated with the remote UE.

According to another aspect, a method by a base station (BS) includes establishing a first connection directly connected to a last relay user equipment (UE), receiving an initial radio resource control (RRC) message of a remote UE through the first connection, and receiving a first message of a first relay UE through the first connection, wherein, based on the first message including first identification information of the remote UE and second identification information of a second connection associated with the remote UE, the BS identifies the first relay UE as an intermediate relay UE associated with the remote UE.

According to another aspect, base station (BS) includes a radio frequency (RF) transceiver, and at least one processor connected to the RF transceiver, wherein the at least one processor controls the RF transceiver to form a first connection directly connected to a last relay user equipment (UE), receive an initial RRC message of a remote UE through the first connection, and receive a first message of a first relay UE through the first connection, and based on the first message including first identification information of the remote UE and second identification information of a second connection associated with the remote UE, the BS identifies the first relay UE as an intermediate relay UE associated with the remote UE.

### Advantageous Effects

According to embodiments of the present disclosure, multi-hop-based relay communication may be performed more accurately and efficiently in a wireless communication system. For example, a base station (BS) may clearly identify that a relay user equipment (UE) that has switched to an RRC connection state on a multi-hop U2N path is an intermediate relay UE, and thus appropriate configurations for the connection formed on the relay UE may be performed quickly and accurately.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.
FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 illustrates a communication structure available in a sixth-generation (6G) system according to an embodiment of the present disclosure.
FIG. 7 illustrates an electromagnetic spectrum according to an embodiment of the present disclosure.
FIG. 8 illustrates a radio protocol architecture for SL communication.
FIG. 9 illustrates user equipments (UEs) performing V2X or SL communication.
FIG. 10 illustrates resource units for V2X or SL communication.
FIG. 11 shows an example of a BWP, based on an embodiment of the present disclosure.
FIG. 12 illustrates a procedure in which UEs perform V2X or SL communication according to a transmission mode.
FIG. 13 is a diagram for explaining the control plane procedure of L2 U2N relay (UE-to-Network Relay).
FIG. 14 is a diagram illustrating a 5G ProSe multi-hop U2N relay discovery procedure using Model A discovery.
FIG. 15 is a diagram illustrating a 5G ProSe multi-hop U2N relay discovery procedure using Model B discovery.
FIG. 16 is a diagram illustrating a multi-hop based U2N relay operation.
FIG. 17 is a diagram illustrating the structure of an SRAP header, according to an embodiment.
FIG. 18 is a diagram illustrating the structure of an SRAP control PDU, according to an embodiment.
FIG. 19 is a diagram illustrating a method of performing multi-hop based U2N relay communication by a first relay UE.
FIG. 20 is a diagram illustrating a method of performing multi-hop based U2N relay communication by a BS.
FIG. 21 illustrates a communication system applied to the present disclosure.
FIG. 22 illustrates wireless devices applicable to the present disclosure.
FIG. 23 illustrates another example of a wireless device to which the present disclosure is applied.
FIG. 24 illustrates a vehicle or an autonomous driving vehicle applied to the present disclosure.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrierfrequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

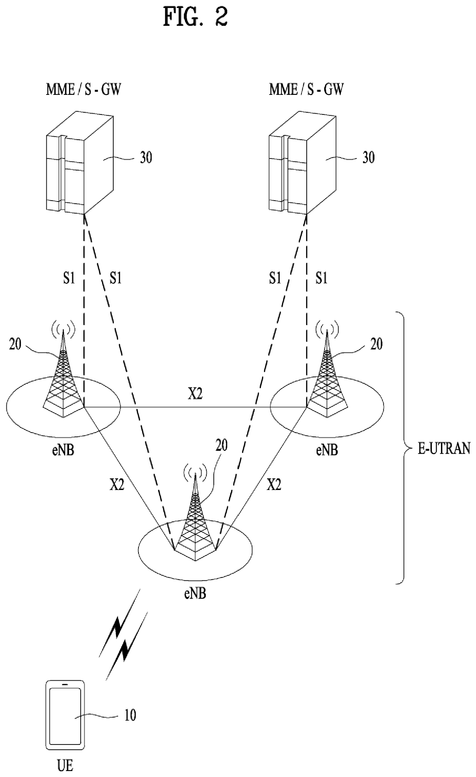

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2), and Layer 3 (L3). These layers are defined in pairs between a UE and an Evolved UTRAN (E-UTRAN), for data transmission via the Uu interface. The physical (PHY) layer at L1 provides an information forward service on physical channels. The radio resource control (RRC) layer at L3 functions to control radio resources between the UE and the network. For this purpose, the RRC layer exchanges RRC messages between the UE and an eNB.

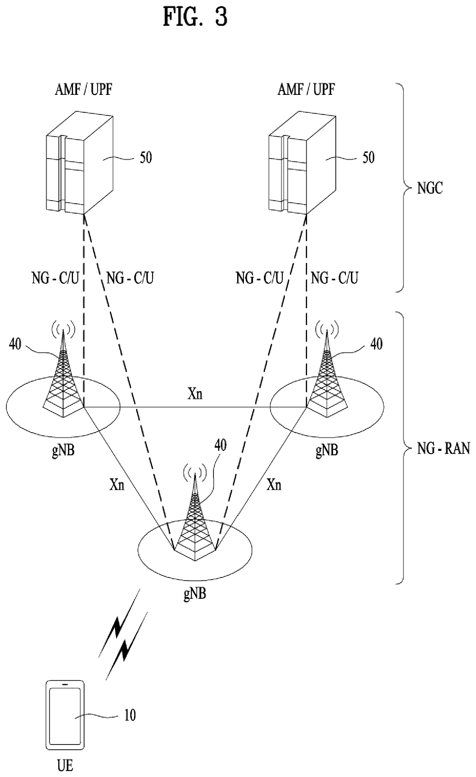

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

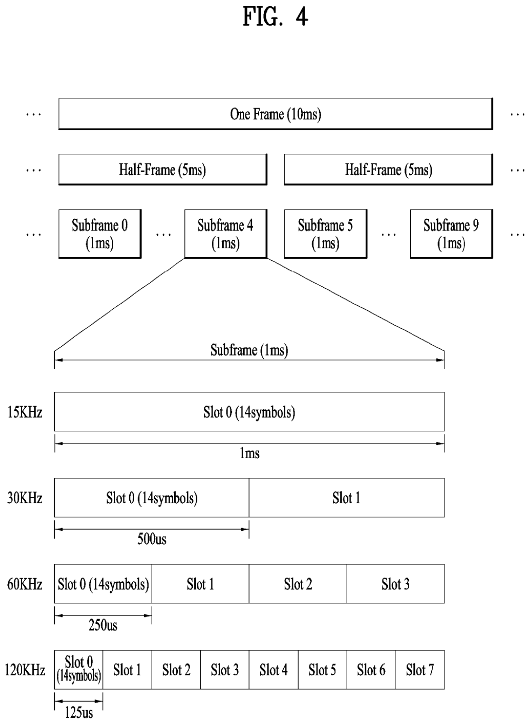

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame *N^{frame,u}ₛₗₒₜ*, and the number of slots per subframe *N^{subfram,u}ₛₗₒₜ* according to an SCS configuration µ in the NCP case.

**[Table 1]**

| SCS (15*2u) | N^{slot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

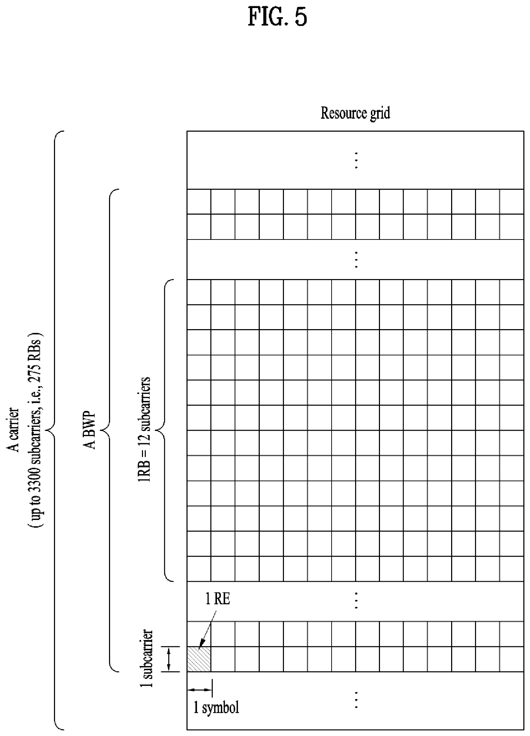

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

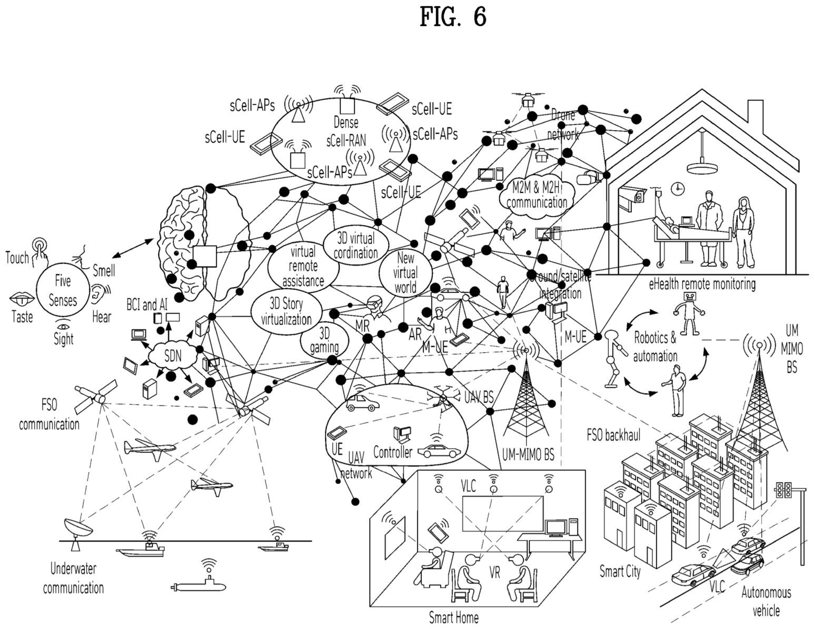

FIG. 6 illustrates a communication structure available in a sixth-generation (6G) system according to an embodiment of the present disclosure. The embodiment of FIG. 6 may be combined with various embodiments of the present disclosure.

In 6G, new network features may include the following.
- Integrated satellite network
- Connected intelligence: In contrast to previous generations of wireless communication systems, 6G may update the wireless advancement from "connected things" to "connected intelligence". Artificial intelligence (AI) may be applied in each step of communication procedures (i.e., each step of signal processing to be described later).
- Seamless integration of wireless information and energy forward
- Ubiquitous super three-dimensional (3D) connectivity: Access to networks and core network functions pm drones and very low earth orbit satellites may enable super 3D connectivity in 6G universal.

Regarding the new network feature of 6G as described above, several common requirements may include the following:
Small cell networks
Ultra-dense heterogeneous networks
High-capacity backhaul

Radar technology integrated with mobile technology: High-accuracy localization via communication (or location-based service) is one of the functionalities of the 6G wireless communication system. Therefore, radar systems will be integrated with the 6G network.

Softwarization and virtualization

Hereinafter, the key implementation technologies of the 6G system will be described.
- Artificial intelligence (AI): Introducing AI into communication may simplify and enhance real-time data transmission. AI may determine how complex tasks are performed using numerous analyses. In other words, AI may increase efficiency and reduce processing delays. Time-consuming tasks such as handover, network selection, and resource scheduling may be performed instantly with the use of AI. AI may also play a crucial role in machine-to-machine (M2M), machine-to-human, and human-to-machine communication. In addition, AI may enable rapid communication in a brain-computer interface (BCI). AI-based communication systems may be supported by metamaterials, intelligent architectures, intelligent networks, intelligent devices, intelligent recognition radios, self-sustaining wireless networks, and machine learning.
- Terahertz (THz) communication: Increasing the bandwidth may enhance data transmission rates, which may be achieved by using sub-THz communication with wide bandwidths and applying the advanced massive multiple input multiple output (MIMO) technology. THz waves, also known as submillimeter radiation, typically represent frequency bands between 0.1 THz and 10 THz, corresponding to wavelengths in the range of 0.03 mm to 3 mm. The band range from 100 GHz to 300 GHz (sub-THz band) is considered to be the main part of the THz band for cellular communications. Adding the sub-THz band to mmWave bands increases the capacity of 6G cellular communications. The band from 300 GHz to 3 THz of the defined THz band falls within the far infrared (IR) frequency band. The band from 300 GHz to 3 THz is part of the optical band, but the band lies at the boundary of the optical band and immediately after the RF band. Therefore, this 300 GHz to 3 THz band shows similarities to RF.

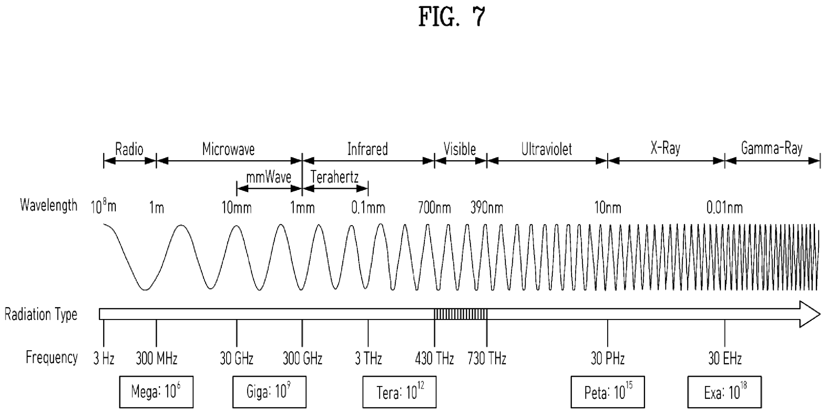

FIG. 7 illustrates an electromagnetic spectrum according to an embodiment of the present disclosure. The embodiment of FIG. 7 may be combined with various embodiments of the present disclosure. The key characteristics of THz communication include: (i) wide available bandwidths to support very high data transmission rates, and (ii) high path losses at high frequencies (highly directional antennas are indispensable). Narrow beamwidths generated by highly directional antennas reduce interference. The small wavelengths of THz signals allow a larger number of antenna elements to be incorporated into devices and BSs operating in this band. This enables the use of advanced adaptive array technologies capable of overcoming range limitations.
- Large-scale MIMO technology
- Hologram beamforming (HBF)
- Optical wireless technology
- Free-space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Blockchain
- Unmanned aerial vehicle (UAV): UAVs or drones will be crucial elements in 6G wireless communication. In many cases, high-data-rate wireless connectivity may be provided using the UAV technology. BS entities may be installed on UAVs to provide cellular connectivity. The UAV may possess specific capabilities not found in fixed BS infrastructure, such as easy deployment, robust line-of-sight links, and degrees of freedom with controlled mobility. During emergencies such as natural disasters, the deployment of terrestrial communication infrastructure may not be economically feasible, and sometimes, it is impossible to provide services in volatile environments. The UAV may easily handle such situations. The UAV will represent a new paradigm in wireless communication. This technology facilitates the three fundamental requirements of wireless networks: enhanced mobile broadband (eMBB), ultra-reliable low latency communications (URLLC), and massive machine type communications (mMTC). In addition, the UAV may support various purposes such as improving network connectivity, fire detection, disaster emergency services, security and surveillance, pollution monitoring, parking monitoring, and accident monitoring. Therefore, the UAV technology is recognized as one of the most important technologies in 6G communication.
- Autonomous driving (self-driving): Vehicle-to-everything (V2X) communication, a key element in establishing autonomous driving infrastructure, refers to a technology that allows vehicles to communicate and share information with various elements on the road, such as vehicle-to-vehicle (V2V) and vehicle-to-infrastructure (V2I) wireless communications. To maximize the performance of autonomous driving and ensure high safety standards, fast transmission speeds and low-latency technologies are essential. In addition, autonomous driving in the future may involve actively intervening in vehicle operation and directly controlling vehicles in hazardous situations beyond just providing warnings or guidance messages to drivers. To accommodate the vast amount of information that needs to be transmitted and received, it is expected in 6G that autonomous driving capabilities will be maximized with faster transmission speeds and lower latency compared to 5G.

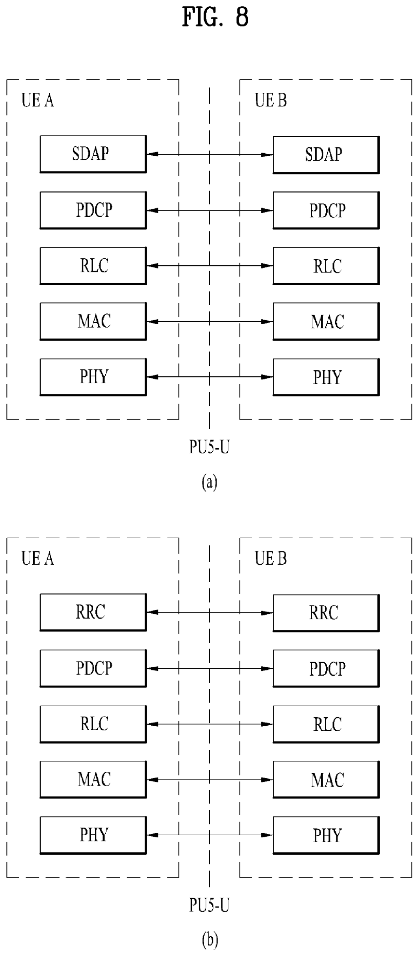

FIG. 8 illustrates a radio protocol architecture for SL communication. Specifically, FIG. 8-(a) shows a user plane protocol stack of NR, and FIG. 8-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

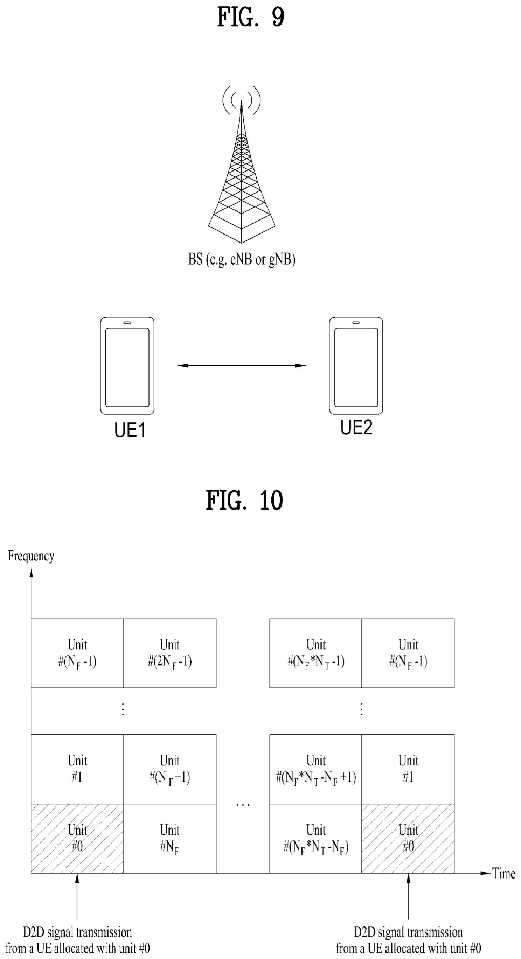

FIG. 9 illustrates UEs performing V2X or SL communication.

Referring to FIG. 9, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 10 illustrates resource units for V2X or SL communication.

Referring to FIG. 10, the frequency resources of a resource pool may be divided into N_{F} sets, and the time resources of the resource pool may be divided into N_{T} sets. Accordingly, a total of N_{F} * N_{T} resource units may be defined in the resource pool. FIG. 10 shows an exemplary case where the resource pool is repeated with a periodicity of NT subframes.

As shown in FIG. 10, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.
(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.
(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.
(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

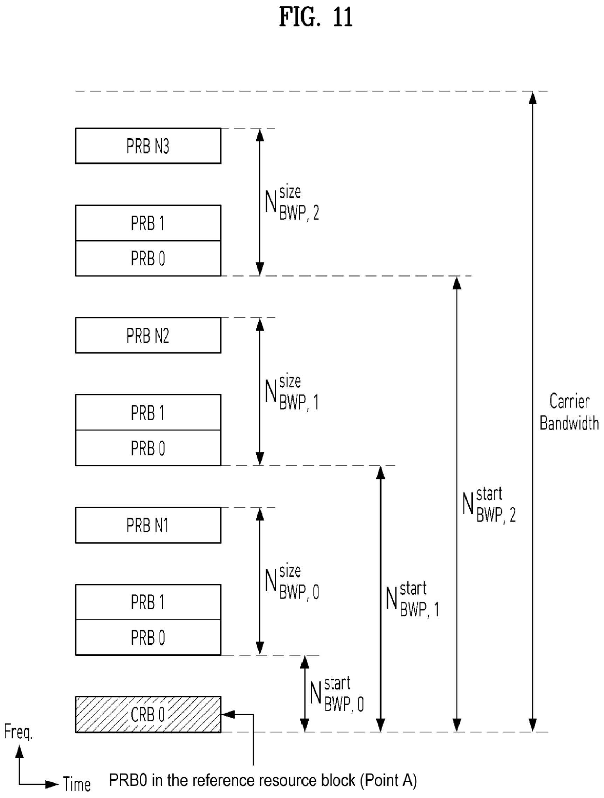

FIG. 11 shows an example of a BWP, based on an embodiment of the present disclosure. The embodiment of FIG. 11 may be combined with various embodiments of the present disclosure. It is assumed in the embodiment of FIG. 11 that the number of BWPs is 3.

Referring to FIG. 11, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described. The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

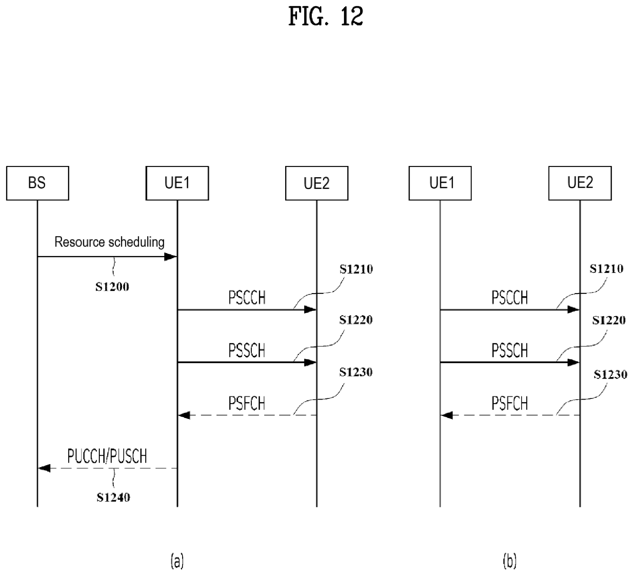

FIG. 12 illustrates a procedure for a terminal to perform V2X or SL communications in accordance with a resource allocation mode, according to one embodiment of the present disclosure. The embodiment of FIG. 12 may be combined with various embodiments of the present disclosure.

Referring to FIG. 12-(a), in LTE transmission mode 1, LTE transmission mode 3 or NR resource allocation mode 1, the BS may schedule an SL resource to be used by the UE for SL transmission. For example, in operation S1200, the base station may transmit to the first terminal information associated with the SL resource and/or information associated with the UL resource. For example, the UL resource may include a PUCH resource and/or a PUSCH resource. For example, the UL resource may be a resource for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In operation S1510, the first UE may transmit a PSCCH (e.g., sidelink control information (SCI) or 1st-stage SCI) to a second UE based on the resource scheduling. In operation S1220, the first UE may transmit a PSSCH (e.g., 2nd-stage SCI, MAC PDU, data, etc.) related to the PSCCH to the second UE. In operation S1230, the first UE may receive a PSFCH related to the PSCCH/PSSCH from the second UE. For example, HARQ feedback information (e.g., NACK information or ACK information) may be received from the second UE through the PSFCH. In operation S1240, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 12, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in operation S1210, a first UE which has selected resource(s) from a resource pool by itself may transmit a PSCCH (e.g., sidelink control information (SCI) or 1st-stage SCI) to a second UE by using the resource(s). In operation S1220, the first UE may transmit a PSSCH (e.g., 2nd-stage SCI, MAC PDU, data, etc.) related to the PSCCH to the second UE. In operation S1230, the first UE may receive a PSFCH related to the PSCCH/PSSCH from the second UE.

Referring to (a) or (b) of FIG. 12, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI, or a 2nd-stage SCI format.

Referring to (a) or (b) of FIG. 12, at operation S1530, the first terminal may receive the PSFCH. For example, the first terminal and the second terminal may determine a PSFCH resource, and the second terminal may use the PSFCH resource to transmit HARQ feedback to the first terminal.

Referring to (a) of FIG. 12, at operation S1540, the first terminal may transmit the SL HARQ feedback to the base station via PUCCH and/or PUSCH.

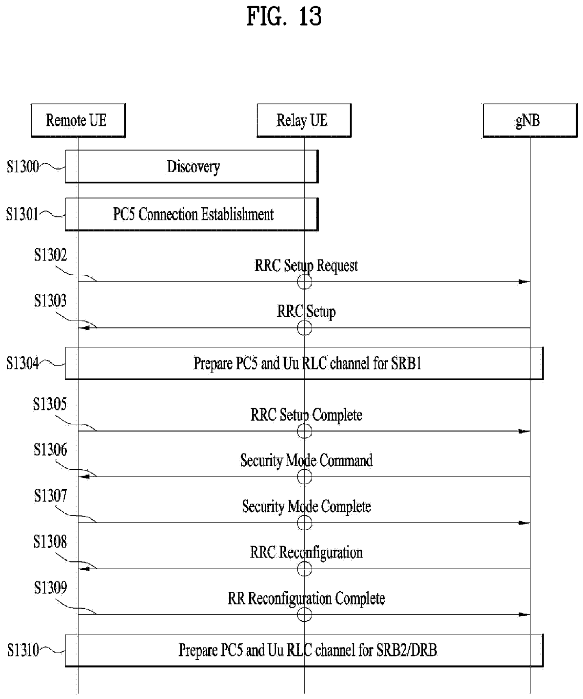

FIG. 13 is a diagram for explaining the control plane procedure of L2 U2N relay (UE-to-Network Relay).

Regarding PC5-RRC in Rel-16 NR V2X, a PC5 unicast link establishment procedure may be reused to setup a secure unicast link between the remote UE and a relay UE for Layer 2 UE-to-network (L2 U2N) relaying before the remote UE establishes a Uu RRC connection with the network through the relay UE.

When the remote UE initiates a first RRC message to establish a connection with the gNB for both in-coverage and out-of-coverage cases, the PC5 L2 configuration for transmission between the remote UE and the U2N relay UE may be based on the radio link control (RLC) and/or medium access control (MAC) configuration defined in the standard. To establish Uu signaling radio bearer 1/signaling radio bearer 2 (SRB1/SRB2) and DRBs, the remote UE follows the legacy Uu configuration procedure for L2 U2N relaying.

A specific scenario (TS 38.300) describes a control plane procedure for an L2 U2N relay.

In operation S1300, the remote UE and relay UE may perform a discovery procedure. In operation S1301, the remote UE and relay UE may establish a PC5-RRC connection based on legacy Rel-16 procedures.

In operation S1302, the remote UE may transmit the first RRC message (i.e., RRCSetupRequest) to establish the connection with the gNB through the relay UE using the default PC5 L2 configuration. The gNB responds to the remote UE with an RRCSetup message (S1303). The default PC5 configuration is used to transmit the RRCSetup message to the remote UE. If the relay UE has not started in the RRC_CONNECTED state, the relay UE needs to establish the connection upon receiving a message about the default PC5 L2 configuration.

In operation S1304, the gNB and relay UE perform a relay channel setup procedure over Uu. Depending on the configuration of the gNB, the relay/remote UE establishes an RLC channel for relaying SRB1 to the remote UE over PC5. This operation prepares the relay channel for SRB1.

In operation S1305, the SRB1 message (e.g., RRCSetupComplete message) from the remote UE is transmitted to the gNB through the relay UE on the SRB1 relaying channel over PC5. The remote UE establishes the RRC connection over Uu.

In operations S1306 and S1307, the remote UE and gNB establish security according to legacy procedures, and a security message is transmitted through the relay UE.

In operations S1308 and S1309, the gNB transmits an RRCReconfiguration message to the remote UE through the relay UE to establish the SRB2/DRB for relaying. The remote UE responds to the gNB with an RRCReconfigurationComplete message through the relay UE.

In operation S1310, the gNB establishes an additional RLC channel between the gNB and relay UE for traffic relay. Depending on the configuration of the gNB, the relay/remote UE establishes additional RLC channels between the remote UE and relay UE for traffic relay.

For L2 U2N relaying in addition to the connection establishment procedure:
- The RRC reestablishment and RRC connection release procedures may reuse legacy RRC procedures along with the message content/configuration design left in the WI phase.
- The RRC connection reestablishment and RRC connection resume procedures may reuse legacy RRC procedures as a baseline by considering the connection establishment procedure of the L2 U2N relay above to handle relay-specific parts along with message content/configuration design. The message content/configuration may be defined at a later stage.

### 5G ProSe Multi-hop U2N Relay Discovery Procedure

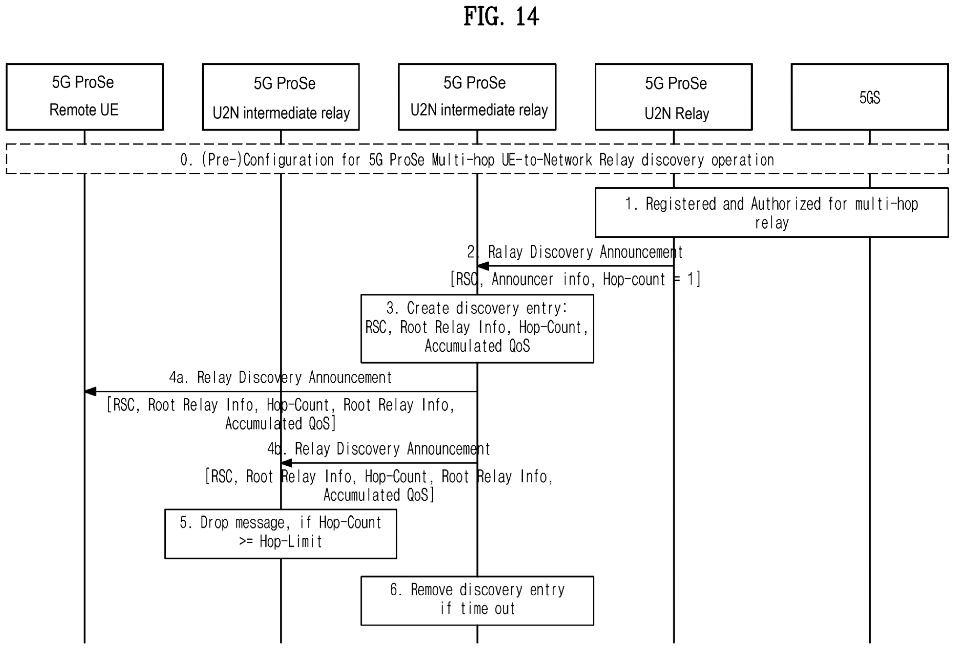

FIG. 14 is a diagram illustrating a 5G proximity-based services (ProSe) multi-hop U2N relay discovery procedure using Model A discovery.

A 5G ProSe remote UE, a 5G ProSe intermediate U2N relay, and a 5G ProSe U2N relay are (pre)configured or provisioned with related information to support multi-hop U2N relay discovery. When the 5G ProSe remote UE, the 5G ProSe intermediate U2N relay, and the 5G ProSe U2N relay belong to different PLMNs, it may be ensured that their respective HPLMNs are provided with a consistent configuration.
1. When the 5G ProSe U2N relay has been successfully registered and authorized by the 5GS and has a configuration to operate as a multi-hop U2N relay in the current area, a discovery procedure may be initiated. Otherwise, 5G ProSe multi-hop U2N relay discovery need not be performed, and no announcement messages need to be transmitted.
2. The 5G ProSe U2N relay transmits a 5G ProSe U2N relay discovery announcement message. To support multi-hop U2N relay discovery, the 5G ProSe U2N relay may configure the Hop-Count to 1 and configure the Announcer Info to its own User Info ID.
3. The 5G ProSe intermediate U2N relay generates the discovery entry based on the received 5G ProSe U2N relay discovery announcement message. This applies only if the message satisfies the AS layer criteria and the Hop-Count is smaller than the maximum hop count (preconfigured) for the related reference signal carrier (RSC) and the optional Hop-Limit within the message.

The discovery entry includes the following information: RSC, (optional) Root relay Info, Announcer Info, Hop-Count, (optional) cumulative QoS for PC5 link, (optional) NCGI, and (optional) RRC Container. Announcer Info is configured to the Announcer Info of the received message. Root relay Info is configured to the Root relay Info of the received message. Hop-Count is configured to the value of the received message.

If cumulative QoS information exists in the received discovery message, the information is updated based on the QoS of a PC5 link between the 5G ProSe intermediate U2N relay and a message transmitter. If a discovery entry with the same RSC and (optional) Root relay Info already exists, and the Hop-Count of the received message is smaller than the Hop-Count of the stored discovery entry, the 5G ProSe intermediate U2N relay updates the discovery entry with the message. In this case, Announcer Info and Hop-Count are configured to the value of the newly received discovery message.

Depending on the implementation, the 5G ProSe intermediate U2N relay may determine to update the discovery entry by considering the Hop-Count instead of or together with the Hop-Count and cumulative PC5 QoS information.

4a. The 5G ProSe intermediate U2N relay transmits a 5G ProSe U2N relay discovery announcement message by using the information of the stored discovery entry. The Hop-Count value is increased by 1, and the Announcer Info is configured to the User Info of the 5G ProSe intermediate U2N relay. If this message is received by a 5G ProSe remote UE, and the Hop-Count in the message is less than or equal to the (pre)configured maximum hop count and optional Hop-Limit for the related RSC, the message is used for relay (re)selection. The 5G ProSe Remote UE may also consider the accumulated PC5 link QoS. For relay reselection, Root relay Info may be used to prioritize the relay that provides a connection to the same 5G ProSe U2N relay.

4b. The 5G ProSe intermediate U2N relay may transmit a 5G ProSe U2N relay discovery announcement message by using information from a stored discovery entry, and this message may reach another 5G ProSe intermediate U2N relay.

5. The 5G ProSe intermediate U2N relay discards the message if the Hop-Count of the received message is not less than the (pre)configured maximum hop count and optional Hop-Limit for the related RSC.

6. The 5G ProSe intermediate U2N relay configures a locally configured timer for each discovery entry depending on the implementation.

If the 5G ProSe intermediate U2N relay does not have an active PC5 link with the relay identified by the Announcer Info of the discovery entry and has not received a new announcement message from the relay, the 5G ProSe intermediate U2N relay removes the discovery entry and stop transmitting the related 5G ProSe U2N relay discovery announcement message.

Depending on the configuration, the 5G ProSe intermediate U2N relay may need to configure a Layer-2 link before transmitting a 5G ProSe U2N relay discovery announcement message to a relay identified by the Announcer Info of the discovery entry.

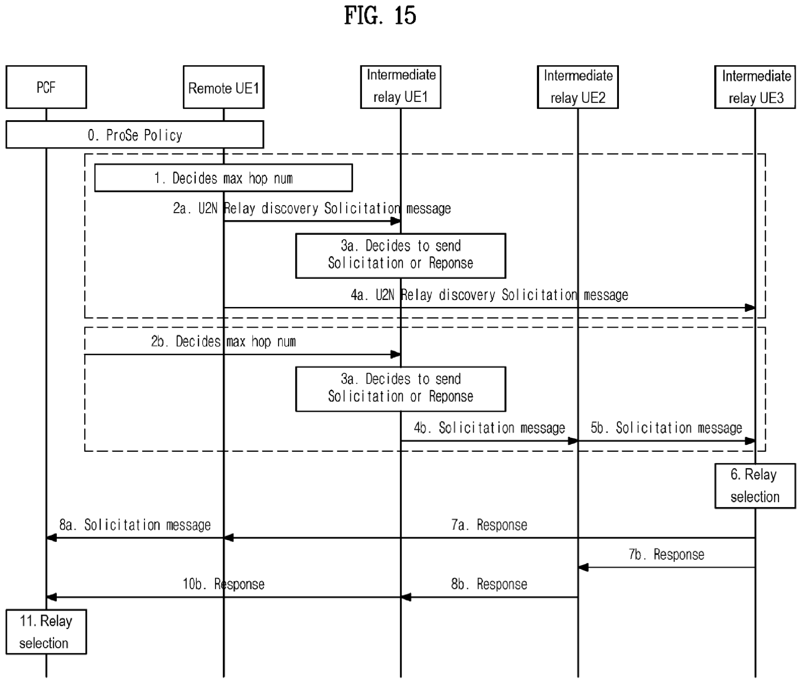

FIG. 15 is a diagram illustrating a 5G ProSe multi-hop U2N relay discovery procedure using Model B discovery.
1. The 5G ProSe Remote UE determines the Hop-Limit for discovery based on policy configuration (e.g., mapping between maximum hop count and RSC) or QoS requirements. If the Hop-Limit is determined based on the configuration related with the RSC, the 5G ProSe Remote UE does not include the Hop-Limit in the solicitation message. In other cases, the 5G ProSe Remote UE includes a Hop-Limit in the solicitation message.

2a. The 5G ProSe Remote UE transmits a 5G ProSe U2N relay discovery solicitation message. The 5G ProSe U2N relay discovery solicitation message additionally includes the following information elements (IE) compared to the existing single-hop 5G ProSe U2N relay discovery solicitation message: an indication that multi-hop relay is supported, a hop count, and a hop-limit. Target Info may include a User Info IDs of the U2N relay and the intermediate U2N relay.

3a. If the received solicitation message contains an indication that a multi-hop relay is supported, the RSC in the message matches one of the (pre-configured) RSCs of the intermediate U2N relay, and the Target Info matches the User Info ID of the 5G ProSe intermediate U2N relay, the intermediate U2N relay may determine to transmit a 5G ProSe U2N relay discovery solicitation message. If the hop count (corresponding to the number of relays included in the message) contained in the received solicitation message reaches the (pre)configured maximum hop count related with the Hop-Limit or the RSC, the 5G ProSe intermediate U2N relay needs to discard the message. If a 5G ProSe intermediate U2N relay has already discovered or configures a PC5 link with one or more 5G ProSe U2N relays, the 5G ProSe intermediate U2N relay may transmit a response message without transmitting the solicitation message. For example, operations 4a to 7a described below are omitted, and operation 8a is performed directly. The response message further includes a User Info ID of a U2N relay and path information to the U2N relay, and the path information is a list of User Info IDs of intermediate U2N relays (in order). If the same Remote UE and U2N relay User Info ID information is received from different ProSe UEs, the 5G ProSe intermediate U2N relay may select the solicitation message to transmit to a next hop based on various criteria (e.g., hop count, delay, channel quality of the received message, and the like).

4a. When a 5G ProSe intermediate U2N relay transmits a solicitation message, the message further includes its own User Info ID. For example, the message contains path information including an ordered list of User Info IDs and Layer-2 IDs of relays that relay the solicitation message. Hop count increases by 1. The solicitation message may include cumulative QoS information for the PC5 link. If the received solicitation message contains cumulative QoS information, the information is updated to include the PC5 link QoS between the 5G ProSe intermediate relay and the child UE (intermediate relay UE or remote UE).

2b.to 5b. The solicitation message from the same remote UE is forwarded through a list of 5G ProSe intermediate U2N relays in a different order.

6 to 7. If the RSC included in the solicitation message matches one of the (pre)configured RSCs for the 5G ProSe U2N relay and the Target Info matches the User Info ID of the 5G ProSe U2N relay, the 5G ProSe U2N relay transmits a 5G ProSe U2N relay discovery response message to the 5G ProSe intermediate U2N relay. The response message further includes path information. The response message may include received PC5 link cumulative QoS information.

The 5G ProSe U2N relay may select a path based on criteria such as the PC5 signal strength of each received message, the number of hops to the remote UE, path information, and cumulative QoS.

Determination on when the 5G ProSe U2N relay will transmit a relay discovery response message depends on the implementation.

8 to 9. When a 5G ProSe U2N relay discovery response message is received, if the User Info ID of the received 5G ProSe intermediate U2N relay is included in the path information, the 5G ProSe intermediate U2N relay forwards the response message. The response message further includes path information including a list of User Info IDs of the intermediate U2N relays and the remote UE, following the order from the remote UE to the last 5G ProSe intermediate U2N relay.

Based on the path information, the relay discovery response message is forwarded along a path, and each 5G ProSe intermediate U2N relay determines next hop information (User Info ID and Layer-2 ID, and the like) and transmits the message. The response message may include received cumulative PC5 QoS information.

10. When a remote UE receives a plurality of discovery response messages within a preconfigured time window, the remote UE may perform relay path selection based on, for example, path information, PC5 signal strength between the remote UE and an adjacent intermediate U2N relay, cumulative QoS, a hop count to the 5G ProSe U2N relay, and the like.

If the 5G ProSe Remote UE does not receive any response within a preconfigured time, the UE may increase the Hop-Limit and retransmit the discovery message according to application requirements.

Hereinafter, the Indirect path failure information procedure will be described. The purpose of this procedure is to notify a network of an indirect path failure experienced by an MP remote UE.

In the case of multipath (MP), if one of the following conditions is satisfied and MCG transmission and indirect path transmission are not suspended, the MP remote UE initiates a procedure to report an indirect path failure:
1> When an SL indirect path failure occurs on the PC5 unicast link due to a sidelink radio link failure, or when a NotificationMessageSidelink received from an L2 U2N Relay UE (except when indicating a relayUE-HO), an SL indirect path addition/change failure, or a request for a PC5-RRC connection release by an upper layer occurs, or
1> Cases in which an N3C indirect path failure is detected include an N3C connection failure, a Uu failure of an N3C relay UE using an N3C indirect path, or an N3C indirect path addition/change failure.

When the procedure is initiated, the UE performs the following:
1> If the procedure is initiated to report an SL indirect path failure:
   2> The sidelink specific MAC of the L2 U2N relay UE is initiated;
   2> T421 is stopped when T421 operates;
1> Indirect path transmission for all SRBs and DRBs is suspended;
1> Transmission of *IndirectPathFailureInformation* message is initiated.

Then, the determination of the failure type may be as follows.

An L2 U2N remote UE with an SL indirect path configured needs to configure the indirect path failure type according to the following conditions:
1> When the UE initiates transmission of *IndirectPathFailureInformation* message due to 5. T421 expiry:
   2> *failureTypeIndirectPath is configured* to t421-Expiry;
   1> When the UE initiates the transmission of an IndirectPathFailureInformation message due to the reception of *NotificationMessageSidelink* containing indicationType:
      2> *failureTypeIndirectPath* is set to a *indicationType* value received from *NotificationMessageSidelink* (excluding *relayUE-CellReselection*);
   1> When the UE initiates transmission of the *IndirectPathFailureInformation* message due to sidelink radio link failure:
      2> *failureTypeIndirectPath* is set to *sl-Failure*;
      1> When the UE initiates transmission of an *IndirectPathFailureInformation* mesage due to PC5-RRC connection release by a request from Layer-5 layer:
         2> f*ailureTypeIndirectPath* is set to *sl-PC5-Release*;
         1> If the (target) L2 U2N Relay UE identified by *sl-IndirectPathRelayUE-Identity* specified in the received *sl-IndirectPathAddChange* changes a serving cell to a cell other than the target cell specified by the *sl-IndirectPathRelayUE-Identity* in the *sl-IndirectPathAddChange* during path addition or modification; or
         1> When the UE initiates transmission of the *IndirectPathFailureInformation* message due to N3C Indirect path addition/change failure:
            2> *failureTypeIndirectPath* is set to *indirectPathAddChangeFailure*;

The N3C remote UE needs to be configured with the indirect path failure type as follows:
1> When the UE initiates transmission of the IndirectPathFailureInformation message due to N3C connection failure:
   2> *failureTypeIndirectPath* is set to n3c-Failure;
   1> When the UE initiates transmission of the *IndirectPathFailureInformation* message due to Uu radio link failure on N3C indirect path:
      2> *failureTypeIndirectPath* is set to *relayUE-Uu-RLF*;
**Method of reporting state of relay UE/remote UE**

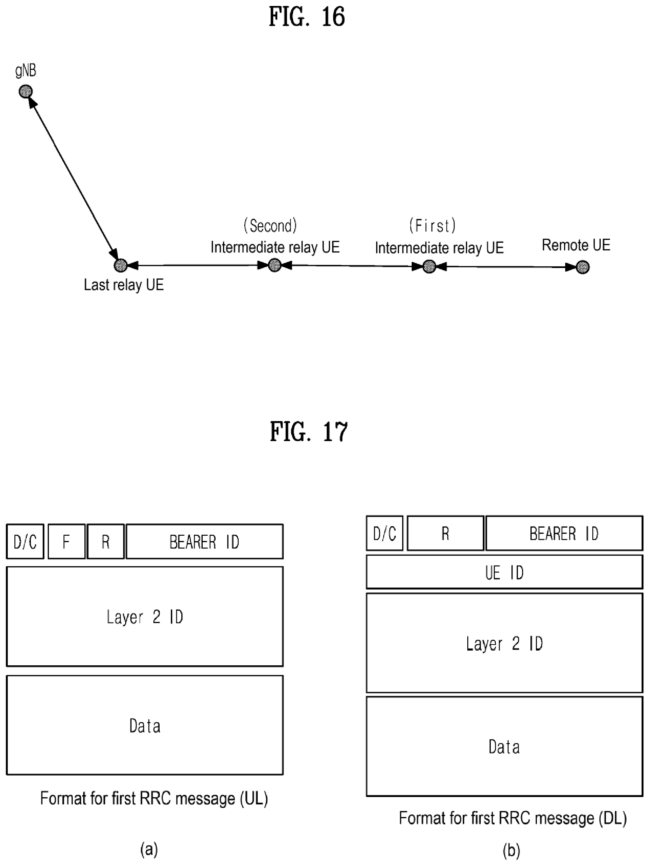

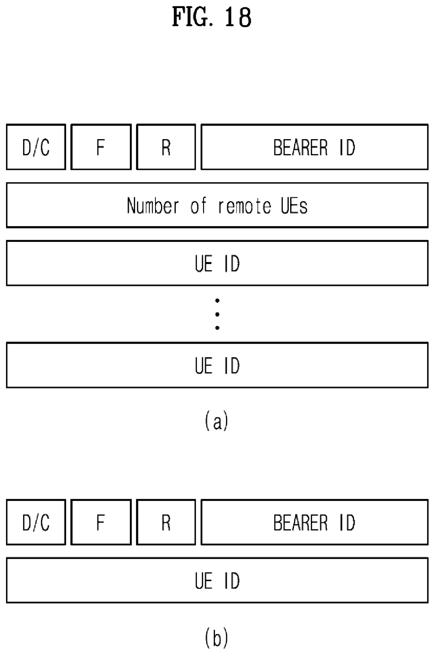

FIG. 16 is a diagram illustrating a multi-hop based U2N relay operation. FIG. 17 is a diagram illustrating the structure of an SRAP header, according to an embodiment. FIG. 18 is a diagram illustrating the structure of an SRAP control PDU, according to an embodiment.

Referring to FIG. 16, a remote UE may be connected to a BS (gNB) through a first intermediate relay UE, a second intermediate relay UE, and a last relay UE. In multi-hop based U2N relay communication, a relay UE connected in an upstream or uplink (UL) direction may be defined as a parent relay UE or a parent UE, and a relay UE (and/or remote UE) connected in a downstream or downlink (DL) direction may be defined as a child relay UE or child UE. For example, in terms of the second intermediate relay UE, the last relay UE may be defined as a parent relay UE or a parent UE, and the first intermediate relay UE may be defined as a child relay UE or a child UE.

The remote UE may transmit an initial RRC message (e.g., RRCSetupRequest, RRCReestablishmentRequest, or RRCResumeRequest message) toward the first intermediate relay UE through the specified SL-RLC0 (and/or SRB0). The first intermediate relay UE that receives this may transmit the received initial RRC message to the second intermediate relay UE through the specified SL-RLC0. In this case, both the first intermediate relay UE and the second intermediate relay UE may be in the RRC_IDLE state (or RRC_IDLE state) or the RRC_INACTIVE state (or RRC_INACTIVE state). In a similar manner, an initial RRC message to establish an RRC connection initiated by a remote UE may be forwarded to the last relay UE. In this case, the last relay UE may be in the RRC_CONNECTED state, or may initiate an operation to become the RRC_CONNECTED state after receiving an RRC message from the remote UE.

The local ID for the remote UE may be a value assigned by the gNB. However, the intermediate relay UE may be in the RRC_IDLE or RRC_INACTIVE state, and thus the gNB may not be able to inform the intermediate relay UE of the local ID for the remote UE via the Uu RRC message. Accordingly, when a remote UE transmits an initial RRC message toward a gNB, the remote UE may transmit the L2 ID of the remote UE in a sidelink relay adaptation protocol header (SRAP header) that transmits the initial UL RRC message. For example, the remote UE may add an SRAP header as shown in (a) of FIG. 17 to the initial UL RRC message and transmit the message to the first intermediate relay UE. The first intermediate relay UE and the second intermediate relay UE that receive the message may determine which remote UE may be connected to via which PC5 link (via the SRAP header). For example, the first intermediate relay UE and/or the second intermediate relay UE may store a correspondence/mapping relationship between the PC5 link and the L2 ID of the remote UE.

When the first RRC message (or initial RRC message) is forwarded to the gNB, the gNB may assign a local ID for the remote UE. The gNB may transmit an initial RRC DL message (e.g., an RRCSetup, RRCReestablishment, or RRCResume message) to a remote UE, and may transmit the local ID for the remote UE and the L2 ID of the remote UE in the SRAP header of the initial RRC DL message. For example, the gNB may transmit to the last relay UE by adding an SRAP header as shown in (b) of FIG. 17 to the initial UL RRC message. Here, the UE ID may refer to a local ID. The first intermediate relay UE and the second intermediate relay UE that receive the message may determine which local ID value corresponds to the L2 ID of the remote UE stored through the previously received initial RRC message (or, initial UL RRC message). For example, the first intermediate relay UE and the second intermediate relay UE may correspond/map the local ID and the L2 ID of the remote UE based on the initial UL RRC message and/or the initial DL RRC message.

For example, an intermediate relay UE in the RRC_IDLE state or RRC_INACTIVE state (e.g., the first intermediate relay UE and/or the second intermediate relay UE) may store information about which PC5 link the remote UE may be reached through and a local ID value that may be mapped to the PC5 link, based on an initial UL/DL RRC message transmitted through SRB0. An intermediate relay UE that stores a linkage/mapping relationship between the PC5 link and the local ID (and/or the L2 ID of the remote UE) through the SRAP header of the initial UL/DL RRC message may determine which PC5 link to transmit the message through when the UE subsequently receives a message containing the local ID (e.g., UE ID). For example, if the association/mapping relationship between the local ID and the PC5 link is established through the initial RRC message, the UL/DL message transmitted thereafter may be transmitted including only the local ID of the remote UE, as in the existing Rel-17 U2N SRAP structure. For example, unlike the initial RRC message, subsequent UL/DL messages may not need to include the L2 ID of the remote UE in the SRAP header.

In this mode of operation, if the L2 ID of the remote UE changes during operation, or if the remote UE is no longer in the RRC_CONNECTED state and is released, or transitions to the RRC_IDLE state or RRC_INACTIVE state, a method may be required for the intermediate relay UE to know this. For example, this is because it may be difficult to determine the state change of the remote UE based solely on the values included in the SRAP header of the initial RRC message described above.

In detail, the method of determining which PC5 link an intermediate relay UE may forward a local ID and data having the local ID to using the SRAP header of the initial RRC UL/DL message described above is not established through an RRC message from the gNB, and thus there may be a disadvantage in that changes in the remote UE may not be detected. For example, the L2 ID of a remote UE may be changed periodically for security reasons. If the L2 ID of a remote UE changes, the remote UE in the RRC_CONNECTED state may report the changed L2 ID to the gNB through its sidelink UE information (SUI).

When an intermediate relay UE that is in the RRC_IDLE or RRC_INACTIVE state transitions/is switched to the RRC_CONNECTED state, the intermediate relay UE needs to inform the gNB that it is the intermediate relay UE used for communication between the gNB and the remote UE. This is because while the intermediate relay UE is in the RRC_IDLE or RRC_INACTIVE state, the gNB may not be aware of the presence of the intermediate relay UE, but when the intermediate relay UE enters the RRC_CONNECTED state, it is necessary to perform configurations for relay communication (e.g., RLC configuration, MAC configuration, and/or PHY configurations) for the intermediate relay UE. Therefore, an intermediate relay UE that has entered the RRC_CONNECTED state needs to report the following information to receive the configuration for a relay operation. If the intermediate relay UE knows its own hop count and/or the total hop count value to the remote UE, the intermediate relay UE may also report the total hop count value together.

An intermediate relay UE that has switched to an RRC connection state may transmit information to the gNB that may identify the local ID for the currently stored remote UE and the PC5 link mapped to the local ID.
- For example, the PC5 destination L2 ID may be reported (e.g., the L2 ID of the relay UE in the direction of the remote UE currently directly connected to the intermediate relay UE and PC5). As illustrated in FIG. 16, when the second intermediate relay UE in the RRC_IDLE state or RRC_INACTIVE state becomes RRC_CONNECTED state, the second intermediate relay UE may need to report to the gNB the L2 ID (or local ID) of the remote UE and the L2 ID of the first intermediate relay UE that may be associated therewith. For example, the first intermediate relay UE may report the ID (or L2 ID) of the first intermediate relay UE, which is a next intermediate relay UE facing the direction of the remote UE. Alternatively, if the next UE of the intermediate relay UE that has switched to the RRC connection state is a remote UE, the ID of the remote UE (or L2 ID) may be reported to the gNB. For example, if the next UE of an intermediate relay UE that has switched to an RRC connection state is a remote UE, the intermediate relay UE may report the L2 ID of the remote UE and/or the local ID of the remote UE to the gNB.
- Upon receiving this, the gNB may determine that the intermediate relay UE is an intermediate relay UE that is currently used for a remote UE that is already in the RRC_CONNECTED state. The gNB becomes able to determine which link of the intermediate relay UE requires the necessary configurations to be performed to support relay communication. For example, the gNB may identify a direct connection (or PC5 link) associated with the intermediate relay UE and may perform RLC configurations, MAC configurations, and/or PHY configurations to support relay communication for the identified direct connection.

An intermediate relay UE in the RRC_IDLE or RRC_INACTIVE state may not be able to detect changes in the state of the remote UE, and thus the following describes in detail how the intermediate relay UE may detect changes in the state of the remote UE.

A remote UE connected to an intermediate relay UE that is in the RRC_IDLE or RRC_INACTIVE state may transition from the RRC_CONNECTED state to the RRC_IDLE or RRC_INACTIVE state, or the remote UE may release an operation associated with the relay. In this case, the intermediate relay UE in the RRC_IDLE or RRC_INACTIVE state may not detect a state change of the remote UE. For example, the intermediate relay UE may not determine whether the remote UE no longer maintains the RRC_CONNECTED state or no longer performs relay operations through that intermediate relay UE. If the remote UE no longer performs relay/remote operations through the intermediate relay UE, the intermediate relay UE needs to release the local ID and/or mapping information associated with the remote UE that it stores. Here, the mapping information may include association information between the L2 ID of the remote UE and the link, and related configurations to support a relay operation, and the related configurations may be RLC configurations, MAC configurations, and/or PHY configurations. The following methods may be used to notify of changes in the state of the remote UE.

### (1) Method of using SRAP control PDU

The gNB may provide information to the intermediate relay UE regarding a change in the state of the remote UE (release of remote/relay operation, and switching/transitioning to RRC_IDLE state or RRC_INACTIVE state) by using an SRAP control PDU as illustrated in (a) of FIG. 18. For example, a control SRAP PDU containing the ID of the remote UE (e.g., UE ID) may be generated by the gNB, and the UE ID may be a local ID. The control SRAP PDU may indicate through the "F" bit or "R" bit that the control SRAP PDU is a control PDU for releasing the remote UE (or, a control PDU for notifying a state change). As shown in (a) of FIG. 18, the control SRAP PDU may include the number of remote UEs that have been released (or state change) and may include the local ID of each remote UE. For example, "Number of remote UEs" may indicate the number of remote UEs that need release, and based on the value of "Number of remote UEs," the size of the control SRAP PDU (e.g., a size corresponding to the number of local ID fields of separate remote UEs included in the control SRAP PDU) may be determined/identified.

The control SRAP PDU may be forwarded to the last relay UE by the gNB. The last relay UE may generate a reconfigured SRAP control PDU based on the UE ID value included in the SRAP control PDU. For example, assuming that the control SRAP PDU contains UE IDs 1, 2, 3, 4, and 5, UE IDs 1, 2, and 3 may need to be forwarded via PC5 Link 1 (e.g., if the remote UE corresponding to each of UE IDs 1, 2, and 3 may be reached via PC5 Link 1), and UE IDs 4 and 5 may need to be forwarded via PC5 Link 2 (e.g., if the remote UE corresponding to each of UE IDs 4 and 5 may be reached via PC5 Link 2). In this case, the last relay UE may generate a new control SRAP PDU based on the control SRAP PDU received from the gNB and forward the new control SRAP PDU through the PC5 link that may reach each remote UE. For example, the last relay UE may transmit a first control SRAP PDU, which is reconfigured/generated to include each of UE IDs 1, 2, and 3 with the number of remote UEs for the PC5 link 1 configured to 3, through the PC5 link 1, and transmit a second control SRAP PDU, which is reconfigured/generated to include each of UE IDs 4 and 5 with the number of remote UEs for the PC5 link 2 set to 2, through the PC5 link 2.

In relation to an operation of reconfiguring such SRAP PDUs, each intermediate relay UE that receives the SRAP PDU may also perform an operation similar to that of the last relay UE described above. For example, each of the intermediate relay UEs may identify the PC5 link that needs to be used to reach the remote UE based on the ID of the remote UE included in the SRAP PDU it receives, and may reconstruct the SRAP PDU based on the identification result. This is because if the IDs of the remote UEs are different, the remote UEs may be connected through different PC5 links at the intermediate relay UE. For example, a message corresponding to the ID of the first remote UE may be forwarded through the first PC5 link, and a message corresponding to the ID of the second remote UE may be forwarded through the second PC5 link.

Alternatively, the gNB may generate a separate control SRAP PDU for each remote UE from the beginning, as shown in (b) of FIG. 18, and forward the separate control SRAP PDU to the last relay UE. The last relay UE that receives this may determine which PC5 link the control SRAP PDU needs to be transmitted through based on the UE ID. For example, the PC5 link may be an egress link that needs to be used to reach a remote UE corresponding to the UE ID. This is because the egress link based on the local ID may be a value determined by the gNB configurations. The intermediate relay UE that receives the control SRAP PDU from the last relay UE may also independently verify its local ID and determine the egress link mapped to the local ID, and thus the control SRAP PDU may be forwarded toward the remote UE. For example, the intermediate relay UE may specify the link/connection to which the control SRAP PDU may be transmitted based on the correspondence between the local ID and the egress link.

An intermediate relay UE that receives such a control SRAP PDU may release the local ID it stores (e.g., the local ID of a remote UE) and all information associated with the local ID. Here, all of the information may include remote UE-related information corresponding to the local ID, association information between the local ID and a link (e.g., PC5 link), and/or related configuration information for supporting a relay operation (e.g., RLC configurations, MAC configurations, and/or PHY configurations).

### (2) Method of using RRC message

Information regarding the state change of the remote UE described above or the release of the remote UE may also be transmitted/forwarded via RRC messages. The gNB may forward, to the last relay UE, a Uu RRC message containing information corresponding to or identical to the information contained in the control PDU (e.g., the local ID of the remote UE and an indication that the configuration is to remove/delete/release all configurations related to the remote UE). When the last relay UE receives the Uu RRC message, the last relay UE may determine which PC5 link to transmit the message through based on the local ID of the remote UE. The last relay UE may generate the necessary SL RRC message (e.g., RRCReconfigurationSidelink message) and transmit the message through the associated PC5 link. The intermediate relay UE that receives the SL RRC message may also perform an operation similar to that of the last relay UE described above. This is because the intermediate relay UE may have multiple PC5 links, and different remote UEs may be connected along each PC5 link.

The proposed method may also be applied to other operations using multi-hop. For example, the other operations may include multi-hop operations in integrated access and backhaul (IAB), non-terrestrial network (NTN), and/or Internet of Things (IoT) environments. A PC5 link may be replaced with a simple link. For example, the simple link may be a wireless link or a wired link for connection between nodes. It is obvious that the local ID value may be replaced with a value for identifying a final destination UE. For example, the value for identifying the final destination UE may include an identifier or address for distinguishing the final destination UE. Therefore, the proposed method may be applied for the purpose of notifying a change in the state of a destination and/or releasing related information in a structure that is not under direct control from the gNB. For example, a change in the state of the destination may include a change in the connection state of the destination node or destination UE, a transition to an inactive state, or a disconnection, and the related information may include identifier information associated with the destination, link mapping information, and/or configuration information for communication support.

As described above, if an intermediate relay UE in the RRC_IDLE or RRC_INACTIVE state supports/allows a relay operation for a remote UE in the RRC_CONNECTED state, the intermediate relay UE may not receive Uu RRC configuration messages directly from the gNB. Accordingly, for the intermediate relay UE to support multi-hop, the intermediate relay UE may directly configure the necessary mapping configuration by using the SRAP header information included in the initial UL RRC message transmitted by the remote UE and the initial DL RRC message transmitted by the gNB to the remote UE. For example, the mapping configuration may be for determining the correspondence between the identification information of a remote UE and the PC5 link and/or the data delivery path toward a specific remote UE. However, even if configurations are made in this way, when the remote UE is in the RRC_IDLE state or RRC_INACTIVE state, there may be a problem in a method of releasing the remote UE-related configurations configured in the intermediate relay UE. Considering these problems, the intermediate relay UE may remove the configurations for the remote UE that are no longer needed through the proposed SRAP control PDU or RRC message. Through this method, configuration information of the remote UE that is unnecessarily maintained may be properly organized, and the related configurations of the intermediate relay UE may be properly managed even after a change in the state of the remote UE.

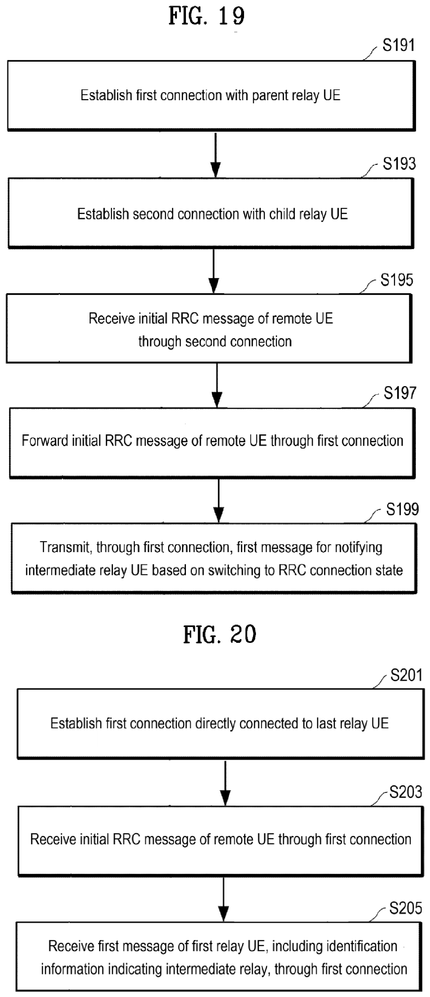

FIG. 19 is a diagram illustrating a method of performing multi-hop based U2N relay communication by a first relay UE.

The first relay UE may be an intermediate relay UE that performs a multi-hop based U2N relay operation to relay data/messages between a BS (or, gNB) and a remote UE as described in "Method for indicating the state of relay UE/remote UE". For example, the first relay UE may establish a direct connection, SL connection, or PC5 connection with a parent UE or parent relay UE in an upstream direction toward a BS as an intermediate relay UE, and establish a direct connection, SL connection, or PC5 connection with a child UE (e.g., child relay UE or remote UE) in a downstream direction toward the remote UE.

In a multi-hop based U2N relay environment, an intermediate relay UE in the RRC_IDLE state or RRC_INACTIVE state may not receive the Uu RRC configuration message directly from the gNB. Accordingly, the intermediate relay UE may independently establish and store a correspondence relationship between the remote UE and the downlink based on header information included in the initial RRC UL message transmitted by the remote UE and the initial RRC DL message transmitted by the gNB toward the remote UE, such as header information related to an inter-UE relay adaptation protocol or SRAP header information. Hereinafter, operations of the first relay UE are explained in detail based on this.

Referring to FIG. 19, the first relay UE may establish a first connection with a parent relay UE (S191). For example, the parent relay UE may be a higher relay UE that is closer to the BS than the first relay UE, a last relay UE that is directly connected to the BS, or another intermediate relay UE. For example, the parent relay UE may be a relay UE directly connected in the upstream direction as described above. The first connection may be a link for forwarding a message or data (e.g., data or message from a child relay UE or remote UE) in the direction toward the BS, or receiving a message or data (e.g., data or message from a parent relay UE or BS) from a parent relay UE (or, downstream direction).

The first relay UE may establish a second connection with the child relay UE (S193). For example, the child relay UE may be a sub-relay UE connected in the direction of the remote UE, and a path to finally reach the remote UE may be formed through the second connection. The second connection may be a link for the first relay UE to forward a message or data in the direction of the remote UE or downstream, or to receive a message or data in the upstream direction.

Then, the first relay UE may receive an initial RRC message of the remote UE through the second connection (S195). Here, the first relay UE may be in a radio resource control (RRC) idle state or an RRC_INACTIVE state. The initial RRC message may be a message generated by the remote UE to configure or reconfigure a connection with the BS, and may include an RRCSetupRequest, an RRCReestablishmentRequest, and/or an RRCResumeRequest. For example, the initial RRC message may reach the first relay UE via the child relay UE (or the child relay UE and the child relay UE of the child relay UE). As described above, the initial RRC message may be a message that includes or has an inter-UE relay adaptation protocol (or SRAP) header containing the L2 ID of the remote UE. In this case, the first relay UE may map the L2 ID of the remote UE to the second connection.

Then, the first relay UE may transmit the initial RRC message of the remote UE through the first connection (S197). Here, unlike conventional methods, the first relay UE may transmit the initial RRC message of the remote UE even in the RRC_IDLE state or the RRC_INACTIVE state. For example, the first relay UE may transmit the initial RRC message to the parent relay UE in a multi-hop manner such that the initial RRC message is transmitted to the BS. In this case, the first relay UE may recognize or store the correspondence/mapping relationship between the second connection and the L2 ID corresponding to the remote UE (e.g., the L2 ID of the remote UE included in the SRAP header added to the initial RRC message) during transmission of the initial RRC message. In this case, even if the first relay UE is in the RRC_IDLE state or the RRC_INACTIVE state, the first relay UE may recognize, based on the relationship/mapping relationship, that the message/data containing the L2 ID or local ID of the remote UE is the message/data to be transmitted through the second connection.

The first relay UE may receive, through the first connection, an initial RRC configuration message (e.g., an RRCReconfiguration message) containing configuration information related to relay communication for the remote UE (e.g., configuration information for establishing an indirect RRC path between the remote UE and the BS through at least one relay UE) in response to the initial RRC message of the remote UE. The RRC configuration message may include or be supplemented with an SRAP header (or an inter-UE relay adaptation protocol header) containing a local ID assigned to the remote UE and an L2 ID for the remote UE. In this case, the first relay UE may store the correspondence/mapping relationship between the local ID included in the SRAP header and the L2 ID of the remote UE, and may transmit the initial RRC configuration message through the second connection mapped to the L2 ID of the remote UE. For example, the first relay UE may establish a second-1 connection and a second-2 connection in the downstream direction, map the second-1 connection to a first L2 ID, and map the second-2 connection to a second L2 ID. In this case, the first relay UE may transmit the RRC configuration message through the second-2 connection if the second L2 ID is included in the SRAP header of the RRC configuration message. In this way, even if the first relay UE is in an RRC_IDLE or RRC_INACTIVE state, it is possible to clearly identify through which connection the message/data destined for the remote UE needs to be transmitted based on the mapping relationship.

For example, as described above, a first relay UE in the RRC_IDLE state or RRC_INACTIVE state may store information about which second connection may reach a specific remote UE and a local ID value that may be associated with the second connection through the header of the initial UL/DL RRC message (SRAP header or inter-UE relay adaptation protocol header). When such linkage is established, the first relay UE may determine which second connection to transmit the message through based solely on the local ID value. Therefore, the header of subsequent UL/DL messages may include only the local ID of the remote UE, and the L2 ID of the remote UE may not need to be included every time.

Then, the first relay UE may transmit a first message through the first connection to indicate that the first relay UE is an intermediate relay UE, based on that the first relay UE has switched from the RRC_IDLE state or the RRC_INACTIVE state to the RRC_CONNECTED state (S199). The first message may include identification information to inform the BS that the first relay UE is an intermediate relay UE. For example, the first message may be a report message that allows the BS to recognize that the first relay UE previously supported relay operations for a remote UE in an RRC_IDLE state or RRC_INACTIVE state. For example, the first message may be transmitted/reported to the BS through the first connection and the parent relay UE. Alternatively, the first message may be transmitted together with an initial RRC message for the RRC connection of the first relay UE, or may be transmitted included in the initial RRC message. Here, the identification information may include first identification information for identifying the remote UE and second identification information for identifying the second connection associated with the remote UE. For example, the first identification information may be an L2 ID of the remote UE obtained from the SRAP header of the initial RRC message of the remote UE, or the local ID of the remote UE obtained from the SRAP header of the initial RRC configuration message. The second identification information may be an L2 ID of the child relay UE that establishes the second connection in the direction of the remote UE or downstream direction associated with the local ID of the remote UE. In this case, the BS may identify which link the first relay UE currently performs the operation of the intermediate relay UE for which remote UE by using the local ID and the second identification information. As such, when the first relay UE transmits the first message containing the identification information to the BS through the first connection, the BS may clearly identify that the second connection is a connection with another relay UE directed toward the remote UE. In this case, the BS may provide the first relay UE with configuration information to support the relay operation to be performed through the second connection. For example, the configuration information may include relay-related configuration information for data transmission through the second connection, control data transmission, and/or remote UE support. For example, the BS may perform configurations for RLC channels/MACs/PHYs, and the like for multi-hop based U2N relay communication for the second connection based on the identification information, and may transmit the configuration information for RLC channels/MACs/PHYs, and the like configured for the second connection to the first relay UE.

Alternatively, the first relay UE may receive control data through the first connection, including information on a change in the state of the RRC for the remote UE or release of the relay operation (or remote operation) of the remote UE, in the RRC_IDLE state or the RRC_INACTIVE state. For example, the state change information may be information or an indicator indicating when the remote UE no longer maintains an RRC connection state, or when a relay operation for the remote UE is no longer required. Such control data may be intended to allow the first relay UE, which is in the RRC_IDLE state or the RRC_INACTIVE state, to clear information related to the remote UE that is no longer needed. For example, the control data may be included in a control PDU associated with the inter-UE relay adaptation protocol. Alternatively, the control data may be included in an inter-UE RRC message. For example, the inter-UE RRC message may be RRC-based control data that may be transmitted between relay UEs or between a node in the direction of the relay UE and the remote UE. In this case as well, the inter-UE RRC message may include information instructing or notifying a change in the state of the remote UE or the release of a relay operation for the remote UE. Such control data may be a message generated by the BS and transmitted to the first relay UE.

For example, the control data may include a field for the number of a plurality of remote UEs corresponding to the state change information and an ID (identifier) field for each of the plurality of remote UEs. For example, the field for the number of the plurality of remote UEs may indicate the number of remote UEs subject to state change or relay operation release. Each of the ID field may include a value for identifying each of the plurality of remote UEs, for example, a local ID or L2 ID corresponding to each remote UE. Through this, the first relay UE may collectively receive and process state change information for a plurality of remote UEs by using a single control data.

FIG. 20 is a diagram illustrating a method of performing multi-hop based U2N relay communication by a BS.

The BS may receive an initial RRC message from a remote UE through a Uu link or Uu connection directly connected to a last relay UE in a multi-hop based U2N relay environment, and may subsequently identify the intermediate relay UE associated with the multi-hop based U2N relay based on a first message transmitted after the intermediate relay UE is switched to the RRC_CONNECTED state. For example, the intermediate relay UE is previously in an RRC_IDLE state or an RRC_INACTIVE state, and thus it may be difficult for the BS to provide relay-related configurations to the intermediate relay UE through direct Uu RRC signaling, but the existence of the intermediate relay UE and its relationship with the remote UE may be recognized through the first message. Hereinafter, this is explained stepwise.

Referring to FIG. 20, the BS may establish a first connection directly connected to the last relay UE (S201). For example, the last relay UE may be a relay UE that communicates directly with a BS in a multi-hop relay path formed in the direction of a remote UE. The first connection may be a Uu link between the BS and the last relay UE. For example, one or more intermediate relay UEs may exist below the last relay UE, and a remote UE or another sub-relay UE may be connected below the one or more intermediate relay UEs.

Then, the BS may receive an initial RRC message from the remote UE through the first connection (S203). For example, the initial RRC message may be a message generated by the remote UE to configure, reconfigure, or resume a connection with the BS, and may include an RRCSetupRequest, an RRCReestablishmentRequest, or an RRCResumeRequest. The initial RRC message may be transmitted from the remote UE to the BS in a multi-hop manner through one or more intermediate relay UEs and last relay UEs. For example, the remote UE may include its L2 ID in header information, such as an SRAP header or a header related to the inter-UE relay adaptation protocol, during a process of transmitting an initial UL RRC message. Intermediate relay UEs may store which remote UE is reachable through which PC5 link by using the L2 ID. However, the BS may not directly recognize the existence of each intermediate relay UE in the RRC_IDLE state or RRC_INACTIVE state even after receiving the initial RRC message.

And/or, the BS may assign a local ID to the remote UE upon a request of the last relay UE (or may assign a local ID to the remote UE after receiving the initial RRC message). The BS may transmit initial DL RRC messages, such as RRCSetup, RRCReestablishment, or RRCResume messages, toward the remote UE. In this case, the header of the initial DL RRC message may include a local ID for the remote UE and an L2 ID of the remote UE. Accordingly, intermediate relay UEs on the path may associate the previously stored L2 ID of the remote UE with the newly transmitted local ID to establish a mapping relationship between the local ID of a specific remote UE and a direct connection link (e.g., a connection in the downstream direction or in the direction of the remote UE).

Then, the BS may receive a first message from a first relay UE containing identification information through the first connection (S205). As described above, the identification information may include a first identification information which is a local ID for the remote UE and a second identification information which is an L2 ID of a child relay UE (or a local ID of the child relay UE) for identifying a second connection associated with the L2 ID. For example, the first message may be a message that is triggered for transmission by the first relay UE when the first relay UE, which previously supported relay operations for the remote UE in the RRC_IDLE state or RRC_INACTIVE state, subsequently transitions to the RRC_CONNECTED state.

For example, while the first relay UE is in the RRC_IDLE state or RRC_INACTIVE state, it may be difficult for the BS to directly determine whether the first relay UE actually operates as an intermediate relay UE for a remote UE. Accordingly, the first message transmitted after the first relay UE is switched to the RRC_CONNECTED state may be necessary as a message for the BS to identify which link the first relay UE acts as an intermediate relay UE for which remote UE.

For example, the BS may identify that the first relay UE is an intermediate relay UE for the remote UE based on the first identification information and the second identification information. For example, the BS may identify which remote UE the first relay UE supports a relay operation for using the first identification information, and may identify which link/connection the first relay UE has formed with the remote UE by using the second identification information. Therefore, the BS may recognize not only the last relay UE, but also, through the first message, the first relay UE is an intermediate relay UE that actually performs a relay function on a multi-hop path. For example, the BS may provide configurations for relay communication support to the first relay UE based on the identification result. The configuration may be RLC, MAC, and/or PHY related configurations to support data transmission or control information transmission through a second connection associated with the remote UE. If the first relay UE additionally knows its own hop count or the total hop count value to the remote UE, such information may also be included in the first message. In this case, the BS may determine a hop count or path characteristics of the relay path more specifically.

Alternatively, the BS may transmit control data to notify the first relay UE in the RRC_IDLE state or RRC_INACTIVE state of a change in the state of the remote UE when the remote UE transitions from the RRC_CONNECTED state to the RRC_IDLE state or RRC_INACTIVE state, or when the U2N relay communication is interrupted (e.g., release of the relay operation). Here, control data may be included in a control PDU or inter-UE RRC message associated with an adaptation protocol and transmitted through the first connection so as to be forwarded to the first relay UE in the RRC_IDLE state or RRC_INACTIVE state.

As such, in the proposed method, a base station (BS) may clearly identify that a relay user equipment (UE) that has switched to an RRC connection state on a multi-hop U2N path is an intermediate relay UE, and thus appropriate configurations for the connection formed on the relay UE may be performed quickly and accurately. The proposed method may ensure that the intermediate relay UE has an opportunity to appropriately release the configuration for the remote UE to which the state change has been instructed, by newly defining control data that may instruct the intermediate relay UE, which is not in an RRC connection state, to change the state of the remote UE.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

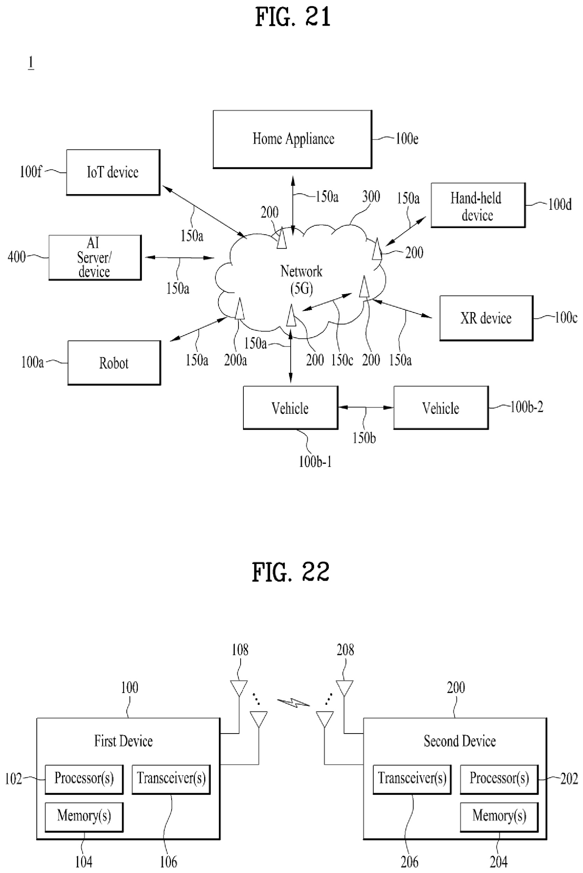

FIG. 21 illustrates a communication system applied to the present disclosure.

Referring to FIG. 21, a communication system 1 applied to the present disclosure includes wireless devices, BSs (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 22 illustrates a wireless device applicable to the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

In detail, the first wireless device or the first relay UE 100 may include the processor 102 and the memory 104 connected to the transceiver 106. The memory 104 may include at least one program for performing operations related to the embodiments described with reference to FIGS. 16 to 20 in the section "Method for indicating state of relay UE/remote UE". The operations may include controlling the transceiver 106 to form a first connection with a parent relay UE and form a second connection with a child relay UE, receiving an initial radio resource control (RRC) message from a remote UE through the second connection, forwarding the initial RRC message from the remote UE through the first connection, and transmitting, through the first connection, a first message that includes identification information to inform a BS that the first relay UE is an intermediate relay UE associated with the remote UE, based on the switching from an RRC_IDLE or RRC_INACTIVE state to an RRC connection state.

Alternatively, a processing device including the processor 102 configured to control the UE and the memory 104 may be configured. In this case, the processing device may include at least one processor, and at least one memory connected to the at least one processor and storing instructions that perform operations when executed by the at least one processor. The operations may include forming a first connection with a parent relay UE, forming a second connection with a child relay UE, receiving an initial radio resource control (RRC) message from a remote UE through the second connection, forwarding the initial RRC message from the remote UE through the first connection, and transmitting, through the first connection, a first message that includes identification information to notify a BS that the first relay UE is an intermediate relay UE associated with the remote UE, based on the switching from an RRC_IDLE or RRC_INACTIVE state to an RRC connection state. Alternatively, at least one non-transitory computer-readable medium may be configured, in which a program/instruction for performing the operations is stored.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

In detail, the second wireless device or BS 200 may include the processor 202 and the memory 204 connected to the transceiver or RF transceiver 206. The memory 204 may include at least one program for performing operations related to the embodiments described with reference to FIGS. 16 to 20 in the section "Method for indicating state of relay UE/remote UE". The operations include controlling the RF transceiver 206 to form a first connection directly connected to a last relay UE, receiving an initial RRC message of a remote UE through the first connection, and receiving a first message of a first relay UE through the first connection, and based on the first message including first identification information of the remote UE and second identification information for a second connection associated with the remote UE, the BS may identify the first relay UE as an intermediate relay UE associated with the remote UE.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

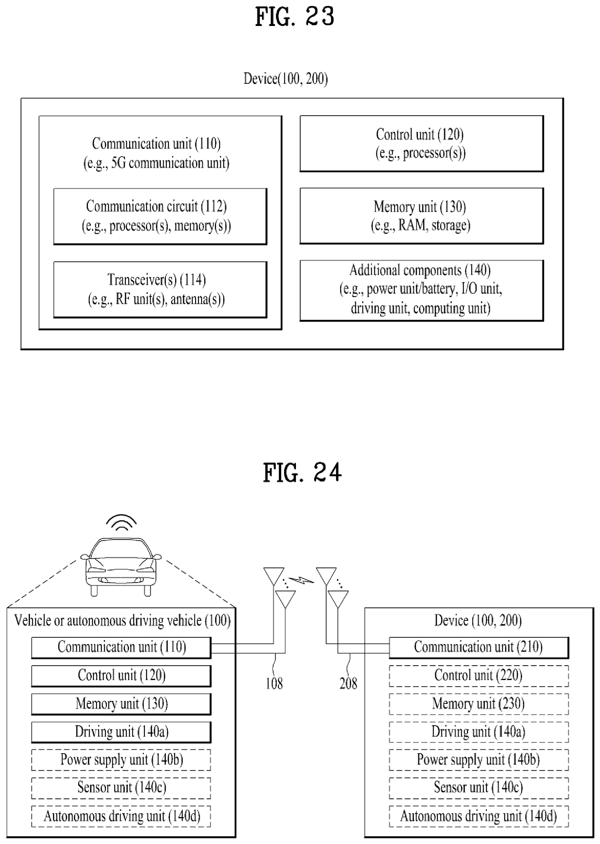

FIG. 23 illustrates another example of a wireless device applied to the present disclosure. The wireless device may be implemented in various forms according to a use-case/service (refer to FIG. 21).

Referring to FIG. 23, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 24 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 24, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may forward information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

Herein, the embodiments of the present disclosure have been described mainly with a focus on a signal transmission and reception relationship between a UE and a BS. This transmission and reception relationship may be similarly/equally extended to signal transmission and reception between a UE and a relay, or between a BS and a relay. A specific operation described as being performed by a BS in the disclosure may be performed by an upper node in some cases. That is, it is obvious that various operations performed for communication with a UE in a network composed of a plurality of network nodes, including the BS, may be performed by the BS or a network node other than the BS. The term BS may be replaced with terms such as fixed station, Node B, eNode B (eNB), or access point. Further, the term terminal may be replaced with terms such as UE (User Equipment), MS (Mobile Station), or MSS (Mobile Subscriber Station).

An embodiment of the present disclosure may be implemented by various means, for example, hardware, firmware, software, or a combination thereof. In the case of hardware implementation, an embodiment of the present disclosure may be implemented by one or more ASICs (application specific integrated circuits), DSPs (digital signal processors), DSPDs (digital signal processing devices), PLDs (programmable logic devices), FPGAs (field programmable gate arrays), processors, controllers, microcontrollers, or microprocessors.

In the case of firmware or software implementation, an embodiment of the present disclosure may be implemented in the form of a module, a procedure, a function, or the like that performs the functions or operations described above. Software code may be stored in a memory unit and executed by a processor. The memory unit may be located inside or outside the processor and exchange data with the processor by various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### Industrial Applicability

The above-described embodiments of the present disclosure are applicable to various mobile communication system.

## Claims

1. A method by a first user equipment (UE), the method comprising:
establishing a first connection with a parent relay UE;
establishing a second connection with a child relay UE;
receiving an initial radio resource control (RRC) message of a remote UE through the second connection;
forwarding the initial RRC message of the remote UE through the first connection; and
based on the first relay UE being switched from an RRC_IDLE state or an RRC_INACTIVE state to an RRC connection state, transmitting, through the first connection, a first message including identification information for notifying a base station (BS) that the first relay UE is an intermediate relay UE associated with the remote UE.

2. The method of claim 1, wherein the identification information includes first identification information for identifying the remote UE and second identification information for identifying the second connection associated with the remote UE.

3. The method of claim 2, wherein the first identification information is a local identifier (ID) assigned to the remote UE, and the second identification information is a layer 2 (L2) ID of the child relay UE.

4. The method of claim 1, further comprising:
receiving, through the first connection, control data to notify the first relay UE, which is in the RRC_IDLE state or the RRC_INACTIVE state, of a state change of the remote UE,
wherein the state change is for a change in an RRC state of the remote UE or for release of a relay operation of the remote UE.

5. The method of claim 4, wherein the control data is included in a control protocol data unit (PDU) related with an inter-UE relay adaptation protocol.

6. The method of claim 4, wherein the control data is included in an inter-UE RRC message.

7. The method of claim 4, wherein, based on reception of the control data, the first relay UE releases both a local ID associated with the remote UE and configuration information of the second connection associated with the remote UE.

8. The method of claim 4, wherein the control data includes a field for a number of a plurality of remote UEs corresponding to the state change and an ID (identifier) field for each of the plurality of remote UEs.

9. The method of claim 1, wherein the first relay UE receives configuration information for the second connection for multi-hop based UE-to-network (U2N) relay communication through the first connection based on transmission of the first message including the identification information.

10. At least one non-transitory computer-readable recording medium including instructions that perform operations when executed by the at least one processor,
the operations comprising:
establishing a first connection with a parent relay user equipment (UE);
establishing a second connection with a child relay UE;
receiving an initial radio resource control (RRC) message of a remote UE through the second connection;
forwarding the initial RRC message of the remote UE through the first connection; and
based on the first relay UE being switched from an RRC_IDLE state or an RRC_INACTIVE state to an RRC connection state, transmitting, through the first connection, a first message including identification information for notifying a base station (BS) that the first relay UE is an intermediate relay UE associated with the remote UE.

11. A first relay user equipment (UE) comprising:
a radio frequency (RF) transceiver; and
at least one processor connected to the RF transceiver,
wherein the at least one processor controls the RF transceiver to establish a first connection with a parent relay UE and establish a second connection with a child relay UE, receiving an initial radio resource control (RRC) message of a remote UE through the second connection, forwarding the initial RRC message of the remote UE through the first connection, and transmitting, through the first connection, a first message that includes identification information to inform a BS that the first relay UE is an intermediate relay UE associated with the remote UE, based on switching from an RRC_IDLE or RRC_INACTIVE state to an RRC connection state.

12. A processing device for controlling a first relay user equipment (UE), the processing device comprising:
at least one processor; and
at least one memory connected to the at least one processor and storing instructions that, when executed by the at least one processor, cause the first relay UE to:
establish a first connection with a parent relay user equipment (UE);
establish a second connection with a child relay UE;
receive an initial radio resource control (RRC) message of a remote UE through the second connection;
forward the initial RRC message of the remote UE through the first connection; and
based on the first relay UE being switched from an RRC_IDLE state or an RRC_INACTIVE state to an RRC connection state, transmit, through the first connection, a first message including identification information for notifying a base station (BS) that the first relay UE is an intermediate relay UE associated with the remote UE.

13. A method by a base station (BS), the method comprising:
establishing a first connection directly connected to a last relay user equipment (UE);
receiving an initial radio resource control (RRC) message of a remote UE through the first connection; and
receiving a first message of a first relay UE through the first connection,
wherein, based on the first message including first identification information of the remote UE and second identification information of a second connection associated with the remote UE, the BS identifies the first relay UE as an intermediate relay UE associated with the remote UE.

14. The method of claim 1, wherein, based on the first identification information and the second identification information, the BS transmits configuration information for the second connection for the multi-hop based UE-to-network (U2N) relay through the first connection.

15. A base station (BS) comprising:
a radio frequency (RF) transceiver; and
at least one processor connected to the RF transceiver,
wherein the at least one processor controls the RF transceiver to establish a first connection directly connected to a last relay user equipment (UE), receive an initial RRC message of a remote UE through the first connection, and receive a first message of a first relay UE through the first connection, and
based on the first message including first identification information of the remote UE and second identification information of a second connection associated with the remote UE, the BS identifies the first relay UE as an intermediate relay UE associated with the remote UE.
